# EUROPEAN PATENT APPLICATION

(11) **EP 2 843 317 A1**
(43) Date of publication of application: **04.03.2015**
(21) Application number: 13780707.9
(22) Date of filing: 24.04.2013
(51) Int. Cl.: F24D 17/00

(54) **WATER-SAVING DEVICE FOR HOT WATER UNIT**

(30) Priority: 27.04.2012 ES 201230462
(71) Applicant: Rodrigo Martorell, Rafael, 46820 Anna (Valencia) (ES); Pelegero Almenara, Francisco, 46820 Anna (Valencia) (ES)
(72) Inventor: Rodrigo Martorell, Rafael, 46820 Anna (Valencia) (ES); Pelegero Almenara, Francisco, 46820 Anna (Valencia) (ES)
(74) Representative: Díaz de Bustamante y Terminel, Isidro
(86) International application number: PCT/ES2013/070264
(87) International publication number: WO 2013/160513

(57) **Abstract**

Water-saving device for hot water units, which being of those that prevent water from being wasted until it reaches the desired temperature, is characterized in that it comprises: - at least one hot water pipe (2) coupled to the hot water circuit of the unit, wherein a first T-shaped part (3) for diverting the water is incorporated, following this one, a first pressure regulator device (4), which reduces the pressure with respect to the pressure of the unit, and after said device a hot water outlet faucet/tap (5).

## Description

### OBJECT OF THE INVENTION

The invention, as exposed on the wording of the present specification, relates to a water-saving device for hot water units, which imparts to the function it is intended to, several advantages and innovative characteristics, which will be described in detail below and which mean an improvement of the current state of the art.

More particularly, the object of the invention focuses on an equipment applicable for being incorporated in hot water units, which may be SHW (sanitary hot water) units or of any other type, both for private homes and for shops, industry or other, and whose purpose is providing a practical and efficient saving system in water consumption which, at the same time, improves the energy efficiency of the heater.

### APPLICATION FIELD OF THE INVENTION

The application field of the present invention is framed within the sector of plumbing, specifically in hot water units, being intended to prevent the waste of cold water until it reaches the desired temperature, by demanding hot water in a unit with a heater.

### BACKGROUND OF THE INVENTION

Referring to the current state of the art, it is worthwhile pointing that different types of apparatuses, systems and devices intended for saving water in hot water units are known, among which it is worth mentioning the following:
- Water-saving systems until it reaches its temperature through its recirculation. Various documents describing systems of this type are known, however, in most of them, the modification of taps and/or of the pipes system is required so as to allow said water circulation, being also of complex installation and maintenance.
- The saving systems, such as the one patented by the University of Castilla-La Mancha, wherein it describes a tap and a pump developed for storing the water which usually is wasted while the hot water arrives and thus reducing the unnecessary consumption.

This system, however, unlike the equipment herein proposed, presents several drawbacks:
- It requires a pump for the transfer of the cold water recycled, which entails an added energy consumption which is avoided with the equipment of the present invention.
- More maintenance, since the electrical elements employed require more maintenance than the mechanical elements used by the equipment herein proposed.
- It requires changing the taps, which raises the price of the product, unlike the equipment herein proposed which allows, with the exception of the specific models for taps, installing the equipment without requiring the change of the taps.

- The system has a limited effectiveness, since it is designed for a single tap and, therefore, in the rest of the wet room the saving is not carried out, whereas with the equipment herein proposed its effectiveness allows covering a whole wet room and reaching all taps thereof with no need of changing said taps.
- Systems recycling the water which is used in the water basin or washbasin in order to use it in the WC.

These systems present, in relation to the equipment of the present invention, the following drawbacks:
- They are useful only in a single tap of the wet room.
- They take up a large space in the wet rooms, which is usually limited and, therefore, very necessary. The proposed equipment may be even installed above the plaster false ceiling and be useful for the whole wet room.
- If the WC is not used, the system gets jammed, since it cannot admit more water within its reservoirs, becoming a useless apparatus which takes up a lot of space. On the contrary, the equipment of the present invention reuses the saved water when a cold water consumption starts in any tap of the wet room.
- Systems recycling the water from the shower and which use it in the WC. In this case, similarly to the previous one, the drawbacks are:
   - That it requires a transfer pump.
   - That it restricts the design of the wet room, since the WC and the shower must be conceived in a specific manner. Therefore, it is not possible install them in certain wet rooms and it is necessary the execution of works for said installations. The equipment which the present invention proposes does not interfere with the design of the wet room.
   - It requires more maintenance, by having electric appliances.
   - It is only useful in one tap.
   - If the WC is not used, the equipment gets jammed and saves no water.
- Water-saving systems wherein the WC and the washbasin are combined. In those, the water which comes out for filling the cistern, passes before through a small washbasin located on top of the WC. Its drawbacks in relation to the equipment of the invention are:
   - That it restricts the design of the wet room, at least with respect to the washbasin and the WC.
   - It is only useful in one tap.
   - If the WC is not used, the equipment gets jammed and saves no water.
   - It complicates the access to the washbasin for people with impaired mobility. The equipment of the present invention, however, is adapted to any kind of wet rooms.
- Water-saving system holding it until it comes out to the suitable temperature, such as the system described in Utility Model U200700578, relating to a seven-way thermal differential valve for sanitary water-saving plumbing systems. Said system is installed between the water mains and the point of consumption. When the hot water tap is turned on, the system manages the water outflow. If this one is not at the suitable temperature, its outflow is stopped until this temperature is correct. If the hot water tap is turned on and turned off again, the system starts and the heater shuts off automatically, holding the hot water in the system, until the time when its use is desired.

This system, being the most similar to the equipment herein proposed, presents the following drawbacks:
- It is an activation mechanism solely and exclusively by means of the tap, whereas the system of the equipment of the present invention is suitable for being activated manually, electrically, by temporization or through home domotics.
- It requires a large plumbing system, which raises the cost of implementation. The equipment of the invention is a Kit for easy mounting.
- The system is based on a seven-way valve, whereas the preconized equipment allows performing the movement of water to the reboiler in different ways.
- Systems which use the wasted water until reaching the desired temperature so as to be used in the cistern of the WC. This system presents the following drawbacks:
   - It is only useful for one tap
   - If the WC is not used, the equipment gets jammed and provides no more saving.

In conclusion, it can be stated that, at least by the applicant, it is unknown the existence of any other system or invention which, with a similar application, presents technical, structural and configuration characteristics similar to the ones presented by the water-saving device for hot water units herein proposed, being the characterizing and distinctive details conveniently collected in the final claims accompanying the present specification thereof.

### EXPLANATION OF THE INVENTION

Specifically, what the invention proposes, as it has been already pointed above, is an equipment applicable for being incorporated in hot water units with the purpose of providing a water consumption-saving system in order to avoid wasting cold water until it reaches the desired temperature.

To this end, the equipment recommended is designed, in its most basic version, as a kit suitable for coupling to any unit, and by which is possible diverting the water circulating by the hot water circuit, which in the beginning comes out cold, to, at least, a pressurized tank whose capacity will be conveniently calculated as a function of the unit.

Thus, to said tank or tanks are diverted all the cold water litres which will not be used since they have not the desired temperature when hot water is demanded, and from which subsequently, when a demand of cold water in the cold water circuit exists, it will be automatically dispensed for being consumed before the one coming from the water mains.

Logically, the equipment, and especially the tank, may be sized and calculated for many different volumes, being even contemplated the installation of several tanks with winter-summer option, since the consumption and the hot water temperature demanded are significantly different in many zones, varying the capacity of the equipment as needed and being applicable as a water and energy saver system both for homes or business and for other applications in which there is a hot water demand.

It is important to emphasize that the installation of the recommended equipment provides significant savings in:
- water,
- fuel for heating water,
- CO₂ emissions,
- products and means for purifying the water,
- products and means for treating waste water,
- energy and means for driving massive amounts of litres of water to the homes,
- etc.

In the light of the aforementioned, it is stated that the described water-saving device for hot water units represents an innovative structure with structural and constitutive characteristics unknown so far to this end, reasons which in combination with its practical utility, provide it with enough basis to obtain the exclusivity privilege which is applied for.

### DESCRIPTION OF THE DRAWINGS

In order to complement the description being fulfilled of the invention and with the aim of helping to a better understanding of the characteristics characterizing it, the present specification is accompanied, as an integral part thereof, by a set of plans, in which by way of illustration and not of limitation, is represented the following:
Figure number 1.- Shows a schematic diagram of the water-saving device for hot water units object of the invention, being appreciated on it the main portions and elements it comprises.
Figure number 2.- Shows a schematic diagram of a system wherein several pieces of equipment are incorporated, according to the invention, so as to provide saving in the use of different taps of different wet rooms.

### PREFERENTIAL EMBODIMENT OF THE INVENTION

In light of the mentioned figures, and according to the numbering taken, it can be seen on them an example of the preferred embodiment, which comprises the parts and elements indicated and described in detail below.

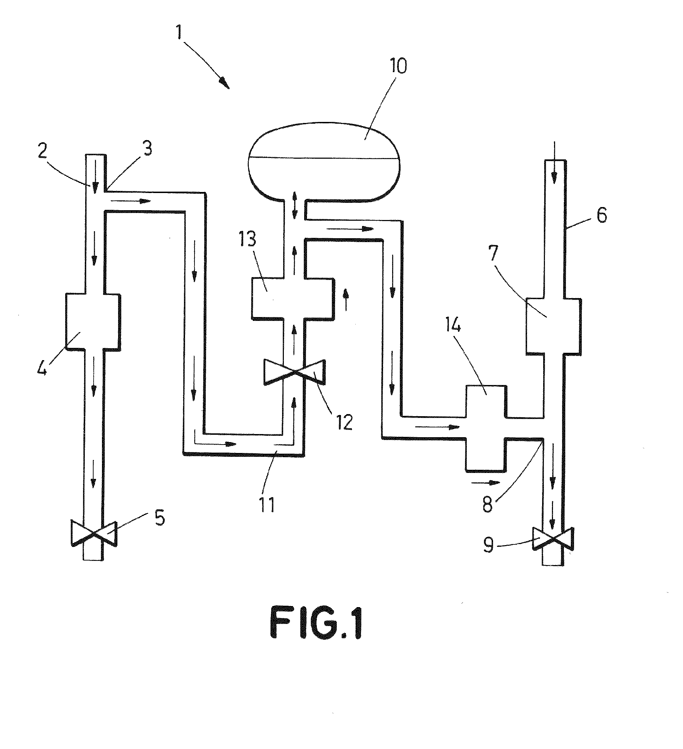

Thus, as it is seen in figure 1, the equipment (1) in question comprises, essentially, the following elements:
- at least, one hot water pipe (2) which, through the corresponding connection element (not represented), couples to the water circuit of the unit, wherein a first T-shaped part (3) for diverting the water is incorporated and, following this one, a first pressure regulator device (4), there being after said device a hot water outlet faucet/tap (5);
- at least, one cold water pipe (6) which, through the corresponding connection element, couples to the cold water circuit of the system, there being in said pipe (6), a second pressure regulator device (7), following the same, a second T-shaped part (8) and, after said T-shaped part, a cold water outlet faucet/tap (9);
- and, at least, one pressurized tank (10) installed in an interconnection section (11) or "bypass" pipe connecting the hot water (2) and cold water (6) pipes from the respective T-shaped parts (3 and 8) provided in them, there being in said interconnection section (11), an drive mechanism (12), which may consist in a timed valve, an electrically operated valve, a thermostatic valve or other, which opens the path for water from the hot water pipe (2) to the pressurized tank (10). Moreover, in this interconnection section (11) it is contemplated, at least, one non-return valve (13), which prevents the transfer of cold water to the pressurized tank, and which is located between said drive mechanism (12) and the tank, and, optionally, a second non-return valve (14) located between the tank and the second T-shaped part (8) connecting the interconnection section (11) and the cold water pipe (6).

It is important to emphasize that, said pressurized tank (10) is, preferably, a diaphragm tank at 1.5 Bar, taking into account that the normal pressure of the systems in which the equipment is implemented, have a pressure of 5 Bar., since with lower pressures it would be convenient increasing the volume of the pressurized tank.

On the other hand, the capacity of the pressurized tank will be enough for storing certain amount of litres, which will be specified as a function of the dimensions of each system and which, at least, will correspond to the litres wasted with a tap until the water reaches the desired temperature.

As a result of this, the operation of the equipment is as follows:
Once installed and the hot water (2) and cold water (6) pipes connected to the corresponding hot and cold water intakes, for example of the shower, the hot water pipe (2) receives water from the hot water circuit at a pressure of 5 Bar and, by turning the hot water faucet/tap (5) on, the timed valve, motorised, etc., given the existence of the first pressure regulator device (4) restricting the working pressure of this hot water pipe to 1.5 Bar, water is diverted through the first T-shaped part (3) to the interconnection section (11) where the drive mechanism (12) is driven, which diverts hot water to the pressurized tank (10), where it is collected while it reaches the desired temperature. Once the pressurized tank (10) holds no more water, it would have reached the desired temperature and comes out hot through the hot water faucet/tap (5) which we have turned on without wasting not even a single drop of cold water.

Meanwhile, in the cold water intake, water enters in the cold water pipe (6) of the equipment at a pressure of 5 Bar, being immediately restricted to 1.5 Bar by the second pressure regulator device (7) provided in it. By turning the cold water faucet/tap (9) on, the water collected in the pressurized tank (10) will be consumed first, since in it the water is at a higher pressure and, only when the water of said tank has been consumed, cold water coming from the water mains will be consumed, with the user perceiving, in said change, no shortage of water.

The non-return valves (13) will prevent cold water from entering the pressurized tank (10) or the hot water pipe (2).

Thus, the installation of the equipment allows for retrieving the flow of undesired cold water, storing it in a pressurized container from which it is obtained when required, through pressure differences with the cold water circuit, where said pressure has been decreased.

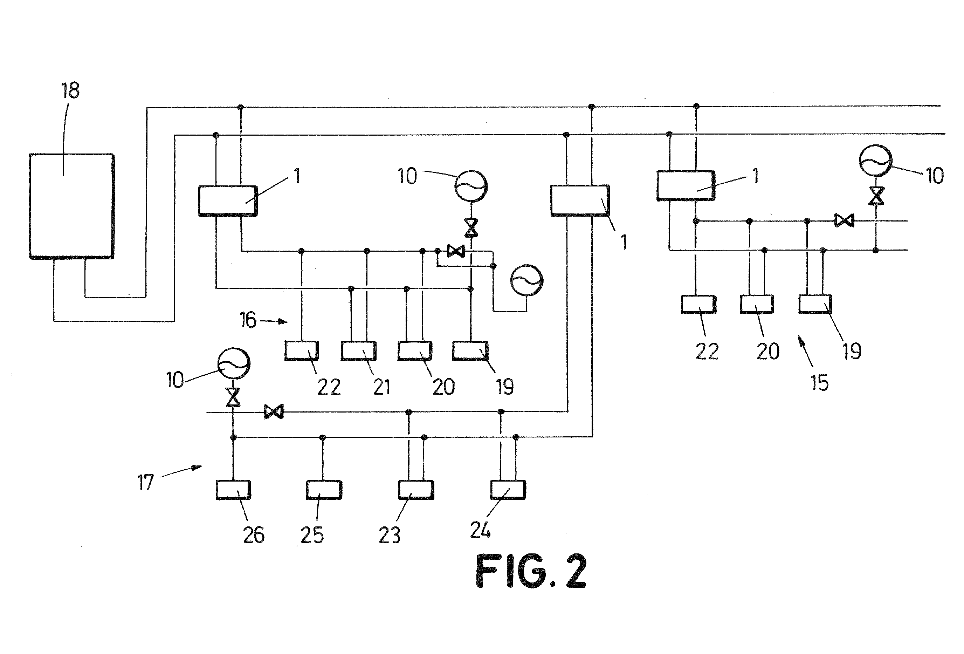

As it is seen in figure 2, the equipment may be installed in all the wet rooms of a single home, for example, a toilet room (15), a bathroom (16) and a kitchen (17) which obtain hot water from a single heater (18), for which, simply, would be enough installing a pressurized tank (10) and the other elements described above of the equipment (represented in this figure 2 through a box referenced with 1) in each of the wet rooms and connecting it to the different taps of the shower (19), washbasins (20), bidet (21) and WC (22) in the bathroom (16) and toilet room (15), and sink (23), washing place (24), washing machine (25) an/or dishwasher (26) in the kitchen (17), thus providing the saving service in each one of them.

Being sufficiently described the nature of the present invention, as well as the way to put it into practice, it is not considered necessary to make an extensive description for an expert in the art understands its reach and the derived advantages, stating that, within its essentiality, it might be put in practice in other embodiments differing in detail from such indicated by way of example, to which the protection requested will also reach, provided that its main principle is not altered, changed or modified.

## Claims

1. WATER-SAVING DEVICE FOR HOT WATER UNITS, which being of those that prevent water from being wasted until it reaches the desired temperature, is **characterized in that** it comprises:
- at least, one hot water pipe (2) coupled to the hot water circuit of the unit, wherein a first T-shaped part (3) for diverting water is incorporated, following this one, a first pressure regulator device (4), which reduces the pressure with respect to the pressure of the unit, and after said device a hot water outlet faucet/tap (5) ;
- at least, one cold water pipe (6) coupled to the cold water circuit of the system, there being in said pipe (6), a second pressure regulator device (7) which reduces the water pressure with respect to the pressure of the unit, following the same, a second T-shaped part (8) and, after this one, a cold water outlet faucet/tap (9) ;
- and, at least, one pressurized tank (10) installed in an interconnection section (11) between the hot water (2) and cold water (6) pipes, there being a drive mechanism (12), which opens the path for water from the hot water pipe (2) to the pressurized tank (10), there being, furthermore, a non-return valve (13), which prevents the transfer of cold water to the pressurized tank.

2. WATER-SAVING DEVICE FOR HOT WATER UNITS, according to claim 1, **characterized in that** in the interconnection section (11) it is contemplated the non-return valve (13) located between the drive mechanism (12) and the tank, and a second non-return valve (14) located between the tank and the second T-shaped part (8) connecting the interconnection section (11) to the cold water pipe (6).

3. WATER-SAVING DEVICE FOR HOT WATER UNITS, according to claim 1 or 2, **characterized in that** the pressurized tank (10) is a diaphragm tank at 1.5 Bar, and the pressure regulator devices (4) and (7) of the hot water (2) and cold water (6) pipes restrict the pressure to 1.5 Bar.

4. WATER-SAVING DEVICE FOR HOT WATER UNITS, according to any of claims 1-3 **characterized in that** the drive mechanism (12) is a timed valve.

5. WATER-SAVING DEVICE FOR HOT WATER UNITS, according to any of claims 1-3 **characterized in that** the drive mechanism (12) is an electrically operated valve.

6. WATER-SAVING DEVICE FOR HOT WATER UNITS, according to any of claims 1-3 **characterized in that** the drive mechanism (12) is a thermostatic valve.
